# EUROPEAN PATENT APPLICATION

(11) **EP 2 031 806 A1**
(43) Date of publication of application: **04.03.2009**
(21) Application number: 07115442.1
(22) Date of filing: 31.08.2007
(51) Int. Cl.: H04L 12/56

(54) **Method and system for managing transmission of fragmented data packets**

(71) Applicant: PacketFront Systems AB, 164 40 Kista (SE)
(72) Inventor: Nyman, Fredrik, 164 40, Kista (SE)
(74) Representative: Hyden, Martin Douglas

(57) **Abstract**

A method of managing transmission of a fragmented datagram in a network comprising end devices and intermediate routing or switching devices, wherein fragmentation of the datagram takes place at an upstream intermediate device, the method comprising:
- receiving and temporarily storing a first datagram fragment at a downstream intermediate device, the fragment including data allowing classification of the fragments of the datagram; and
- receiving and temporarily storing subsequent fragments of the same datagram at the downstream device until either:
i) all datagram fragments are received, at which time all fragments are classified and transmitted on based on the classification data of the first fragment; or
ii) a predetermined time period has elapsed and at least one fragment is missing, at which time an action other than transmission on to a subsequent device is initiated.

## Description

### Technical field

This invention relates to methods and systems for managing the transmission of fragmented data packets over data networks.

### Background art

A generic network for handling data and to which the invention relates comprises end devices that are involved in the generation and display or use of the data, and a series of intermediate devices (e.g. routers) that are responsible for ensuring communication of the data between the end devices. The Internet Protocol has been created to enable communication of data over such networks.

IP is designed to allow a data packet or datagram to be split into multiple smaller pieces or fragments, in order to pass over a link that has a smaller maximum transmission unit (MTU) than the original packet/datagram size. This allows the IP protocol to be used over many types of links. Fragmentation of a packet is typically performed by the router connecting to a link with the smaller MTU. Reassembly, the task of putting all fragments together to a complete packet, is typically performed by the receiving host. This means that once an IP packet has been fragmented, each fragment is transmitted individually over the packet network until it reaches the end host. If one fragment is lost then the whole original datagram is lost and has to be retransmitted (if possible).

Packet classification is the general term used for analysis of the content of a datagram by a router or switch in order to determine the priority of the packet, to which flow the packet belongs, which quality of service (QoS) parameters including rate-limiting (for example policing or shaping) to apply to the packet, etc.

Packet classification is performed by analysing certain fields in a packet. The IP header fields for source and destination IP address and the protocol field are typically used. In more advanced implementations, the next packet header in the datagram, the TCP (Transmission control protocol) or UDP (user datagram protocol) source and destination port fields are also used. These fields indicate what type of data (or application) the data in the packet carries, e.g. e-mail, file transfer, a web-page , TV-stream and the like.

In a situation where IP fragmentation occurs, the IP header is copied and reused almost identically in each fragment. Some fields of the IP header are changed, particularly those relevant to indicate that the new packet is part of a fragmented original packet. However, the next packet header, the TCP or UDP header, is only left in the first fragment. As the TCP and UDP header is regarded as part of the IP packet payload when it comes to fragmentation this means that the second and every subsequent fragment does not carry the information about the TCP or UDP header.

Consequently, when a chain of fragments enters a router that performs packet classification, only the first fragment, which contains the complete IP header and TCP or UDP header, can be properly classified. The remaining fragments lack the information about application and the router can not therefore apply proper packet classification to these packet fragments. Often, in such circumstances where a packet fragment does not contain sufficient information for full classification to take place, the router applies a best effort classification to the fragment. This means that if the original datagram was part of a prioritized packet type (such as a phone call) only the first fragment will be forwarded with priority while the others are handled with lower priority. This can result in disturbances in the service offered to the end-user.

It is an object of the invention to provide a method of data handling that allows fragmented data packets to be transmitted with appropriate classification irrespective of the detailed content of the header.

### Disclosure of the invention

This invention provides a method of managing transmission of a fragmented datagram in a network comprising end devices and intermediate routing or switching devices, wherein fragmentation of the datagram takes place at an upstream intermediate device, the method comprising:
- receiving and temporarily storing a first datagram fragment at a downstream intermediate device, the fragment including data allowing classification of the fragments of the datagram; and
- receiving and temporarily storing subsequent fragments of the same datagram at the downstream device until either:
   i) all datagram fragments are received, at which time all fragments are classified and transmitted on based on the classification data of the first fragment; or
   ii) a predetermined time period has elapsed and at least one fragment is missing, at which time an action other than transmission on to a subsequent device is initiated.

The action in step ii preferably comprises dropping all temporarily stored fragments.

The subsequent fragments can also comprise data relating to classification. Preferably, step i comprises assigning the same classification to all fragments. In one embodiment, this classification is based only on the first fragment.

It is also preferred that the method comprises, following receipt of the first datagram fragment, starting a timer in the downstream intermediate device to determine the time period.

Classification can comprise applying a quality of service profile to the fragments, and may include prioritising the related fragments compared to other packets handled by the device.

In one embodiment, the quality of service profile comprises applying rate limitation of traffic towards the datagram destination.

Classification can also comprise inspecting the complete datagram to determine a quality of service profile that is applied to each fragment.

It is particularly preferred that the intermediate device initially examines the first incoming fragment to determine whether or not classification should be applied.

The invention also provides an intermediate routing or switching device for use in a network comprising end devices and at least two such intermediate devices, wherein fragmentation of a datagram takes place at an upstream intermediate device, the intermediate device being downstream of the upstream device and configured to:
- receive and temporarily store a first datagram fragment including data allowing classification of the fragments of the datagram; and
- receive and temporarily store subsequent fragments of the same datagram until either:
   i) all datagram fragments are received, at which time the intermediate device classifies and transmits all fragments on based on the classification data of the first fragment; or
   ii) a predetermined time period has elapsed and at least one fragment is missing, at which time the intermediate device initiates an action other than transmission on to a subsequent device.

Such a device can be used for implementation of the method according to the invention.

### Brief description of the drawings

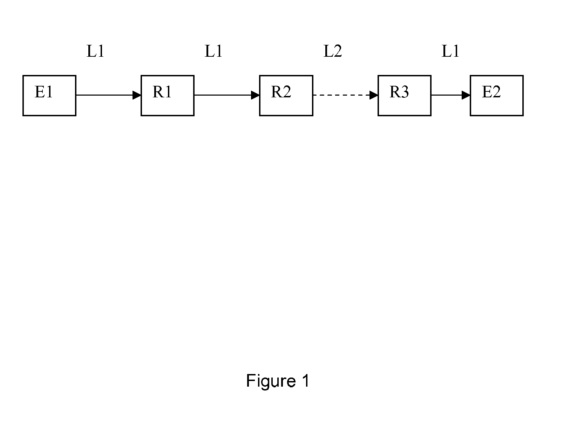

Figure 1 shows a schematic view of a data network to which the invention relates.

### Mode(s) for carrying out the invention

Referring now to Figure 1, the network comprises a source end device E1 and a destination end device E2. End device E1 is connected to the first of a series of intermediate devices (routers) R1 by a data link of capacity L1. The maximum transmission unit (MTU) of the data link is the principal property of interest in the context of its capacity (in the context of this invention, a 10Mbit/s link and a 100Mbit/s link having the same MTU would be considered to have the same capacity). The intermediate device R1 in turn is connected to a further intermediate device R2 by a link of the same capacity L1. Intermediate device R2 is connected to a third intermediate device R3 by a link of capacity L2 which is lower than L1. Finally, intermediate router R3 is connected to the destination end device E2 by a link of original capacity L1. It will be appreciated that this is merely a schematic representation and that real networks typically invoice many intermediate devices and that the link capacity may vary many times across the network.

Because the link between routers R1 and R2 is the same as between end device E1 and router R1 (i.e.L1), packets from end device E1 are merely passed straight on from router R1 to router R2. However, because the capacity of the link between router R2 and router R3 is of a lower capacity (L2), it is necessary to fragment the data packet at R2. These fragments are passed on to the destination end device E2 even though the link from router R3 is of original capacity, the destination device E2 then reassembling the fragments to recreate the original packet.

In this invention the router or switch (intermediate device, other than the end systems involved in the communication, such as router R3) has a packet buffer memory in which data packets can be stored. When an intermediate device receives an IP fragment (identifiable from the IP header) and the fragment is determined to have a destination for which packet classification shall occur, the router temporarily stores the fragment in the packet buffer memory and starts a clock. The router continues to store fragments belonging to the same chain of fragments (again, identified by the IP header) until either all fragments have been received or the clock reaches a predetermined maximum period of time from the first fragment entering the packet memory. While this description considers IP headers, other headers such as TCP/UDP can also be used. These usually also appear in the first fragment. Headers may appear in other fragments if the MTU is very small.

If all fragments have been received the router performs a proper packet classification of all fragments based on the information in the IP header of the first fragment. Once packet classification has been performed, all fragments are forwarded according to the classification. Because the classification is applied to each fragment, priorities, QoS, shaping, etc. can be applied to give the same approach for each fragment.

If the predetermined maximum period of time from the first fragment entering the packet memory has passed, a timeout occurs and all fragments belonging to that chain of fragments are dropped.

The invention thereby enables all fragments of the original packet to be forwarded with correct priority and rate-limiting.

A further benefit of the invention is that since the entire original packet is available, complete packet inspection enables the router to apply quality of service profiles based on content in the original packet payload, not just on the information in the packet IP, TCP or UDP headers.

Changes may be made while remaining within the scope of the invention.

## Claims

1. A method of managing transmission of a fragmented datagram in a network comprising end devices and intermediate routing or switching devices, wherein fragmentation of the datagram takes place at an upstream intermediate device, the method comprising:
- receiving and temporarily storing a first datagram fragment at a downstream intermediate device, the fragment including data allowing classification of the fragments of the datagram; and
- receiving and temporarily storing subsequent fragments of the same datagram at the downstream device until either:
i) all datagram fragments are received, at which time all fragments are classified and transmitted on based on the classification data of the first fragment; or
ii) a predetermined time period has elapsed and at least one fragment is missing, at which time an action other than transmission on to a subsequent device is initiated.

2. A method as claimed in claim 1, wherein the action in step ii comprises dropping all temporarily stored fragments.

3. A method as claimed in claim 1 or 2, wherein at least one of the subsequent fragments also contains data allowing classification of the fragments.

4. A method as claimed in claim 1, 2 or 3, wherein classification in step i is based only on the data in the first fragment.

5. A method as claimed in any preceding claim, wherein step i comprises assigning the same classification to all fragments.

6. A method as claimed in any preceding claim, comprising following receipt of the first datagram fragment, starting a timer in the downstream intermediate device to determine the time period.

7. A method as claimed in any preceding claim, wherein the classification comprises applying a quality of service profile to the fragments.

8. A method as claimed in claim 7, wherein the quality of service profile comprises prioritising the related fragments compared to other packets handled by the device.

9. A method as claimed in claim 7, wherein the quality of service profile comprises applying rate limitation of traffic towards the datagram destination.

10. A method as claimed in any preceding claim, wherein classification comprises inspecting the complete datagram to determine a quality of service profile that is applied to each fragment.

11. An intermediate routing or switching device for use in a network comprising end devices and at least two such intermediate devices, wherein fragmentation of a datagram takes place at an upstream intermediate device, the intermediate device being downstream of the upstream device and configured to:
- receive and temporarily store a first datagram fragment including data allowing classification of the fragments of the datagram; and
- receive and temporarily store subsequent fragments of the same datagram until either:
i) all datagram fragments are received, at which time the intermediate device classifies and transmits all fragments on based on the classification data of the first fragment; or
ii) a predetermined time period has elapsed and at least one fragment is missing, at which time the intermediate device initiates an action other than transmission on to a subsequent device.

12. A device as claimed in claim 11, when configured to operate in accordance with a method as claimed in any of claims 1-10.
